Europäisches Patentamt

European Patent Office

Office européen des brevets

(11) Publication number: **0 107 063**
A1

# (12) EUROPEAN PATENT APPLICATION

(21) Application number: **83109539.3**

(22) Date of filing: **24.09.83**

(51) Int. Cl.³: **C 08 K 5/09**, C 08 L 27/06,
C 08 L 27/24
// (C08K5/09, 5/57, 5/59)

(30) Priority: **28.09.82 US 425839**

(43) Date of publication of application: **02.05.84**
**Bulletin 84/18**

(84) Designated Contracting States: **BE CH DE FR GB IT LI
NL SE**

(71) Applicant: **The B.F. GOODRICH Company,
Dept. 0015 WHB-6 500 South Main Street, Akron,
Ohio 44318 (US)**

(72) Inventor: **Lehr, Marvin Harold, 1252 Briarhill Spur, Bath
Ohio 44313 (US)**

(74) Representative: **von Kreisler, Alek, Dipl.-Chem. et al,
Deichmannhaus am Hauptbahnhof, D-5000 Köln 1 (DE)**

(54) **Stabilization of polymers using citrate salts.**

(57) The invention provides an improved heat stabilization of vinyl chloride polymers (which term includes postchlorinated polymers) utilizing a combination of an organotin or organoantimony primary stabilizer with sodium or potassium citrate. The particle size of the citrate salt is less than 30 μm.

EP 0 107 063 A1

-1-

STABILIZATION OF POLYMERS USING CITRATE SALTS

BACKGROUND OF THE INVENTION

Most synthetic polymer materials undergo deterioration when exposed to light or elevated temperatures over a prolonged period of time. Some polymers are so sensitive to heat that they will degrade objectionably even during the relatively short period of time they are exposed to elevated temperatures during many types of compounding and processing operations. The degradation effects of heat and light on polymers often can be at least temporarily retarded by mixing a heat and light stabilizer (normally referred to as a "primary stabilizer") with the polymer. The particular primary stabilizer chosen will depend upon the polymer to be used.

Chlorine-containing synthetic polymers (whether the chlorine atom is introduced as a part of a monomer or is added by the post-chlorination of a previously formed polymer) are quite susceptible to heat degradation at most normal processing temperatures and, as a consequence, stabilization of the polymer is of significant importance. Typical primary stabilizers used commercially for stabilizing chlorine-containing polymers include a wide variety of materials such as the barium, cadmium, zinc, tin and lead salts of monocarboxylic acids and the organotin and organoantimony stabilizers. Generally, from about 0.5 to 5.0 parts by weight of a primary stabilizer is used per 100 parts by weight of the polymer. However, even with the addition of a primary stabilizer, the polymer composition often is not sufficiently heat-stabilized to permit the composition to be used in processing techniques that require the composition to be heated to moderately high temperatures (for example, product forming by injection molding). Also, the cost of many of the preferred primary stabilizers is relatively high. Accordingly, stabilizer systems which provide better heat stabilization at a reduced cost are sought by the industry.

0107063

-2-

## SUMMARY OF THE INVENTION

The present invention provides a stabilization system for vinyl chloride polymers that produces increased thermal stability and a significant cost savings over many of the stabilizer systems currently in use. In accordance with this invention, sodium citrate or potassium citrate is used in conjunction with an organotin or organoantimony primary stabilizer to produce a synergistic stabilization of the polymer composition. Although it has been proposed heretofore to stabilize post-chlorinated vinyl chloride resin with alkali metal salts of citric acid, with or without the presence of primary stabilizers, (Japanese Kokai Patent No. Sho 49 [1974]-37943, the disclosure of which is incorporated herein by reference), in order to obtain the desired synergistic effect it now has been found that the particle size of the sodium or potassium citrate should be below 30 micrometers (µm). Although the sodium and potassium citrate salts produce the desired synergistic result, not all citrate salts do. For example, rubidium citrate, calcium citrate and strontium citrate failed to produce the desired synergistic results.

## DETAILED DESCRIPTION OF THE INVENTION

The present invention provides an improved stabilization system for vinyl chloride polymers. The term "vinyl chloride polymer", as used herein, includes homopolymers of vinyl chloride (polyvinyl chloride polymers), homopolymers of vinylidene chloride (polyvinylidene chloride polymers), copolymers of vinyl chloride or vinylidene chloride with up to 30 percent by weight of at least one other copolymerizable monoolefinic or vinyl-type comonomer (such as vinylidene chloride, vinyl acetate, methyl acrylate, methyl methacrylate, styrene, acrylonitrile, ethylene, propylene, and the like), and post-chlorinated homopolymers of vinyl chloride or vinylidene chloride (post-chlorinated polyvinyl chloride polymers and post-chlorinated polyvinylidene chloride polymers) and post-chlorinated copolymers of vinyl chloride or vinylidene chloride with up to 30 percent by weight of at least one other copolymerizable monoolefinic or vinyl-type comonomer. Preferred vinyl chloride polymers for use in the present invention are post-chlorinated vinyl chloride polymers having a density in the range of from about 1.46 to about 1.65 grams/cc at 25°C. and a chlorine content in the range of from about 60% to about 72% by weight.

The stabilization system of the present invention comprises a combination of an organotin or organoantimony primary stabilizer and sodium citrate and/or potassium citrate, with the citrate salt having a particle size below 30 μm, preferably a particle size below about 10 μm.

Typical primary stabilizers useful in the present invention include the dialkyltin and alkylantimony carboxylates and mercaptides, for example, dibutyltin dilaurate, dibutyltin maleate, di-n-octyltin maleate, dibutyltin bis-(lauryl mercaptide), dibutyltin S,S-bis(isooctyl thioglycolate), dibutyltin β-mercaptoproprionate, di-n-octyltin S,S-bis(isooctyl thioglycolate, di-n-octyltin β-mercaptoproprionate, and antimony S,S,S-tris(isooctyl thioglycolate). The lead salt primary stabilizers and mixtures of barium salts and cadmium salts have not exhibited the desired synergistic stabilization when combined with sodium or potassium citrate salts. The primary stabilizer used in a particular polymer composition will need to be compatible with the other components of the composition, of course. The organotin stabilizers have been used extensively for stabilizing vinyl chloride polymers commercially even though they are considerably more expensive than many other primary stabilizer systems that are available. About 0.5 to 5.0 parts by weight of the primary stabilizer per 100 parts by weight of the vinyl chloride polymer can be used in the composition, although from 0.5 to 3.0 parts by weight of the primary stabilizer per 100 parts by weight of the vinyl chloride polymer is preferred.

The citrate salt component of the stabilization system can be present in an amount from 0.01 to 5.0 parts by weight of the citrate salt per 100 parts by weight of the vinyl chloride polymer, preferably from 0.01 to 3.0 parts by weight of the citrate salt per 100 parts by weight of the vinyl chloride polymer. A preferred method of combining the citrate salt with the chlorine-containing polymer is to dissolve the citrate salt in water or other volatile solvent for the citrate salt and mix the solution with the polymer. The resulting blend then is dried. Extremely fine particles, as small as 2µm, of the citrate salt are formed in the resulting dried blend. It has been found that very small amounts of the citrate salt (for example, 0.01 to 0.05 parts by weight per 100 parts by weight of the vinyl chloride polymer) will produce significant improvement in post-chlorinated polymers that contain small amounts of iron. It is believed that the citrate acts as an iron chelator and prevents the adverse effect of the iron contaminant.

The composition stabilized in accordance with the present invention also can include compounding ingredients (such as reinforcing agents, curatives, fillers, lubricants, etc.) that normally are included in vinyl chloride polymer compositions.

The following examples illustrate the present invention more fully. The heat stability of the compositions tested was determined by measuring the "dynamic thermal stability" (DTS) of the composition using a Brabender Plastic-Corder torque rheometer with a No. 5 roller head (Model PLV 300). DTS is the time inteval, expressed in minutes, between the start of mixing and breakdown (determined by a sudden increase in torque and change in melt temperature). A 3 minute warm-up period of the sample in the Brabender bowl was allowed before testing of the sample.

## EXAMPLE I

A series of compositions were formed according to the formulations set forth in Table I by blending the ingredients together on a two-roll mill at about 200°C. for 2 minutes. The DTS of each composition was measured. The results of the tests are reported in Table I.

### TABLE I

| Materials       Sample | 1 | 2 | 3 | 4 |
|---|---|---|---|---|
| | Grams | Grams | Grams | Grams |
| CPVC[1] | 108 | 108 | 108 | 108 |
| PETG[2] | 12 | 12 | 12 | 12 |
| AC-629A[3] | .6 | .6 | .6 | .6 |
| Organotin stabilizer[4] (Thermolite 31) | 2.4 | 2.4 | 1.2 | 0 |
| Sodium citrate (particle size - less than 30µm) | 0 | 1.2 | 2.4 | 3.6 |
| DTS (minutes)* | 13.5 | 26 | 33.5 | 6.5 |

*Brabender:  65 g..sample, 215°C. bowl temp., 35 rpm.

(1) Post-chlorinated polyvinyl chloride resin, NC-T-382 produced by Nippon Carbide Industrial Company, Inc., 67% by weight of chlorine.

(2) Modified polyethylene terephthalate, Kodar PETG 6763 produced by Eastman Kodak Company.

(3) Polyethylene, produced by Allied Chemical Company.

(4) Dibutyltin-S,S'-bis(isooctyl mercaptoacetate).

### EXAMPLE II

A series of compositions were formed according to the formulations set forth in Table II using sodium citrate of varying particle sizes.  The ingredients were blended together on a two-roll mill at about 200°C. for 2 minutes. The DTS of each composition was measured.  The results of the tests are reported in Table II.

## TABLE II

| Materials | Sample | 1 Grams | 2 Grams | 3 Grams | 4 Grams |
|---|---|---|---|---|---|
| CPVC (NC-T-382) | | 90 | 90 | 90 | 90 |
| PETG | | 10 | 10 | 10 | 10 |
| AC-629A | | .5 | .5 | .5 | .5 |
| Organotin stabilizer (Thermolite 31) | | 2.0 | 1.0 | 1.0 | 1.0 |
| Sodium citrate | | --- | 2.0[a] | 2.0[b] | 2.0[c] |
| DTS (minutes)* | | 10.5 | 18 | 18 | 8.5 |

*Brabender:  65 g. sample, 215°C. bowl temp., 35 rpm.

(a) fine crystalline, 1-10 μm particles

(b) mixture of particles 1-30 μm

(c) course particles, over 30 μm

EXAMPLE III

A series of compositions were formed according to the formulations set forth in Table III. The ingredients were blended together on a two-roll mill at about 200°C. for 2 minutes. The DTS of each composition was measured. The results of the tests are reported in Table III.

TABLE III

| Materials | Sample | 1 | 2 | 3 |
|---|---|---|---|---|
| | | Grams | Grams | Grams |
| CPVC[1] | | 500 | 500 | 500 |
| Organotin Stabilizer (Thermolite 31) | | 2 | 1 | 1 |
| Titanium dioxide | | 5 | 5 | 5 |
| AC-629A | | 1.125 | 1.125 | 1.125 |
| CPE[2] | | 6 | 6 | 6 |
| Sodium citrate (Particle size - less than 30 μm) | | --- | --- | 1.0 |
| Potassium citrate (particle size - less than 30 μm) | | --- | 1.0 | --- |
| DTS (minutes)* | | 22 | 40 | 41 |

*Brabender: 65 g. sample, 215°C. bowl temp., 35 rpm.

(1) Post-chlorinated polyvinyl chloride resin, GEON® 603x560 produced by The B.F.Goodrich Company, 67% by weight of chlorine.

(2) Chlorinated polyethylene, LD963, produced by E.I. DuPont de Nemours and Company.

EXAMPLE IV

A series of compositions were formed according to the formulations set forth in Table IV by blending the ingredients together on a two-roll mill at about 200°C. for 2 minutes. The DTS of each composition was measured. The results of the tests are reported in Table IV.

TABLE IV

| Materials | Sample | 1 Grams | 2 Grams | 3 Grams | 4 Grams |
|---|---|---|---|---|---|
| CPVC[1] | | 100 | 100 | ---- | ---- |
| CPVC[2] | | --- | --- | 100 | 100 |
| AC-629A | | 1.5 | 1.5 | 1.5 | 1.5 |
| Organotin stabilizer (Thermolite 31) | | 2.0 | 1.0 | 2.0 | 1.0 |
| Potassium citrate (particle size – less than 30μm) | | --- | 1.0 | --- | 1.0 |
| DTS (minutes)* | | 5 | 8 | 5.5 | 9.5 |

*Brabender:  65g. sample, 225°C. bowl temp., 45 rpm.

(1)  Post-chlorinated polyvinyl chloride resin, 66% by weight of chlorine, Sekisui HA91K, produced by Sekisui Kagaku Kogyo Kabushiki Kaisha.

(2)  Water slurry post-chlorinated polyvinyl chloride resin, 61% by weight of chlorine, produced by The B.F.Goodrich Company.

-9-

## EXAMPLE V

A series of compositions were formed according to the formulations set forth in Table V by blending the ingredients together on a two-roll mill at about 200°C. for 2 minutes. The DTS of each composition was measured. The results of the tests are reported in Table V.

TABLE V

| Materials Sample | 1 Grams | 2 Grams | 3 Grams |
|---|---|---|---|
| Polyvinyl chloride resin[1] | 100 | 100 | 100 |
| Polyethylene (AC-629A) | 1.5 | 1.5 | 1.5 |
| Organotin stabilizer (Thermolite 31) | 2.0 | --- | 1.5 |
| Potassium citrate (particle size - less than 30μm) | --- | 2.0 | .5 |
| DTS(minutes)* | 13 | 7.5 | 16.5 |

*Brabender: 65 g. sample, 215°C. bowl temp., 45 rpm.

[1] GEON® 103EP, produced by The B.F.Goodrich Company.

## EXAMPLE VI

A series of compositions were formed according to the formulations set forth in Table VI by blending the ingredients on a two-roll mill at about 200°C. for 2 minutes. The DTS of each composition was measured. The results of the tests are reported in Table VI.

TABLE VI

| Material | Sample | 1 Grams | 2 Grams | 3 Grams | 4 Grams | 5 Grams | 6 Grams | 7 Grams | 8 Grams |
|---|---|---|---|---|---|---|---|---|---|
| CPVC[1] | | 100 | 100 | 100 | 100 | 100 | 100 | 100 | 100 |
| Polyethylene (AC-629A) | | 1.5 | 1.5 | 1.5 | 1.5 | 1.5 | 1.5 | 1.5 | 1.5 |
| Organotin stabilizer (Thermolite 31) | | 1.0 | --- | --- | --- | --- | --- | --- | --- |
| Antimonytin stabilizer[2] (AT6) | | --- | 1.0 | 2.0 | 3.0 | 1.0 | 1.0 | 2.0 | 2.0 |
| Potassium citrate (particle size - less than 30μm) | | 1.0 | --- | --- | --- | 1.0 | 2.0 | 1.0 | 2.0 |
| DTS (minutes)* | | 15.5 | 4 | 6 | 6.5 | 11 | 12 | 9 | 15 |

*Brabender: 65 g sample, 225°C. bowl temp., 45 rpm.

[1] Post-Chlorinated polyvinyl chloride, Nippon Carbide T-1482, produced by Nippon Carbide Industrial Company, Inc.

[2] Antimony tris(isooctyl mercaptoacetate), produced by Synthetic Products Company.

## EXAMPLE VII

A series of compositions were formed according to the formulations set forth in Table VII by blending the ingredients together on a two-roll mill at about 200°C. for 2 minutes. The DTS of each composition was measured. The results of the tests are reported in Table VII.

## TABLE VII

| Materials | Sample | 1 Grams | 2 Grams | 3 Grams | 4 Grams | 5 Grams | 6 Grams | 7 Grams |
|---|---|---|---|---|---|---|---|---|
| CPVC[1] | | 100 | 100 | 100 | 100 | 100 | 100 | 100 |
| AC-629A | | 1.5 | 1.5 | 1.5 | 1.5 | 1.5 | 1.5 | 1.5 |
| Organotin stabilizer (Thermolite 31) | | 2.0 | 2.0 | 2.0 | 2.0 | 2.0 | 2.0 | 2.0 |
| Potassium citrate (particle size - less than 30 μm) | | 0 | 0.1 | 0.25 | 0.5 | 1.0 | 2.0 | 3.0 |
| DTS (minutes)* | | 6 | 8 | 9 | 12 | 16 | 14 | 19 |

*Brabender: 65g. sample, 225°C. bowl temp., 45 rpm

[1] Post-chlorinated polyvinyl chloride resin, GEON® 623x563, produced by The B.F.Goodrich Company.

## EXAMPLE VIII

The following compositions were formed according to the formulations set forth in Table VIII by blending the ingredients together on a two-roll mill at 160°C. for 2 minutes. The DTS of each composition was measured. The results of the tests are reported in Table VIII.

### TABLE VIII

| Materials | Sample | 1 | 2 |
| --- | --- | --- | --- |
| | | Grams | Grams |
| VCl/VCl$_2$ Copolymer[1] | | 80 | 80 |
| AC-629A | | 1.0 | 1.0 |
| Organotin stabilizer (Thermolite 31) | | 2.0 | 1.0 |
| Potassium citrate (particle size - less than 30 µm) | | --- | 1.0 |
| DTS (minutes)* | | 75 | 85 |

*Brabender: 58g. sample, 160°C. bowl temp., 75 rpm.

[1] Copolymer of vinyl chloride and vinylidene chloride prepared by suspension polymerization (85 VCl/VCl$_2$).

## EXAMPLE IX

A series of compositions were formed according to the formulations set forth in Table IX by blending the ingredients together on a two-roll mill at about 200°C. for 2 minutes. The DTS of each composition was measured. The results of the tests are reported in Table IX.

### TABLE IX

| Materials | Sample | 1 | 2 | 3 |
| --- | --- | --- | --- | --- |
| | | Grams | Grams | Grams |
| CPVC (Nippon Carbide T-1482) | | 100 | 100 | 100 |
| AC-629A | | 1.5 | 1.5 | 1.5 |
| Potassium citrate (particle size - less than 30 µm) | | 2.0 | --- | 1.0 |

-14-

| Organotin stabilizer (Thermolite 12)[1] | --- | 2.0 | 1.0 |

DTS (minutes)*  1.5  1  5

*Brabender: 65g. sample, 225°C. bowl temp., 45 rpm.

[1] Dibutyltin dilaurate

## EXAMPLE X

A series of compositions were formed according to the formulations set forth in Table X by blending the ingredients together on a two-roll mill at about 200°C. for 2 minutes. The DTS of each composition was measured. The results of the tests are reported in Table X.

### TABLE X

| Materials | Sample | 1 | 2 | 3 |
|---|---|---|---|---|
| | | Grams | Grams | Grams |
| CPVC (Nippon Carbide T-1482) | | 100 | 100 | 100 |
| AC-629A | | 1.5 | 1.5 | 1.5 |
| Potassium citrate (particle size – less than 30 μm) | | 2.0 | --- | 1.0 |
| Organotin stabilizer (Thermolite 35)[1] | | --- | 2.0 | 1.0 |
| DTS (minutes)* | | 1.5 | 8.5 | 11 |

*Brabender: 65g. sample, 225°C. bowl temp., 45 rpm.

[1] Dibutyltin β-mercaptoproprionate

## EXAMPLE XI

A series of compositions were formed according to the formulations set forth in Table XI by blending the ingredients together on a two-roll mill at about 200°C. for 2 minutes. The DTS of each composition was measured. The results of the tests are reported in Table XI.

0107063

-15-

## TABLE XI

| Materials                                                                 | Sample 1 Grams | 2 Grams | 3 Grams |
|---------------------------------------------------------------------------|----------------|---------|---------|
| CPVC (Nippon Carbide T-1482)                                              | 100            | 100     | 100     |
| AC-629A                                                                    | 1.5            | 1.5     | 1.5     |
| Potassium citrate (particle size – less than 30 µm)                        | 2.0            | ---     | 1.0     |
| Organotin stabilizer (Advastab T-340)[1]                                   | ---            | 2.0     | 1.0     |
| DTS (minutes)*                                                             | 1.5            | 5       | 10      |

*Brabender: 65g. sample, 225°C. bowl temp., 45 rpm.

[1] Dibutyltin maleate

### EXAMPLE XII

The following test results illustrate the beneficial effects of sodium and potassium citrates in overcoming the presence of iron contamination in a CPVC polymer. The GEON® 603x560 polymer (a post-chlorinated polyvinyl chloride) used in these tests contained 8 parts/million of iron contaminant. The compositions tested were formed according to the formulations set forth in Table XII by blending the ingredients together on a two-roll mill at about 200°C. for 2 minutes. The DTS of each composition was measured. The results of the tests are reported in Table XII.

## TABLE XII

| Materials | Sample | 1 Grams | 2 Grams | 3 Grams | 4 Grams | 5 Grams |
|---|---|---|---|---|---|---|
| CPVC (GEON® 603x560) | | 100 | 100 | 100 | 100 | 100 |
| Polyethylene (L-27) | | 1.5 | 1.5 | 1.5 | 1.5 | 1.5 |
| Organotin stabilizer (Thermolite 31) | | 3.0 | 3.0 | 3.0 | 3.0 | 3.0 |
| Potassium citrate (particle size – less than 30 µm) | | --- | 0.1 | 0.2 | 0.3 | 0.5 |
| DTS (minutes)* | | 5 | 9 | 12 | 16 | 20 |

*Brabender: 65g. sample, 225°C. bowl temp., 45 rpm.

The stabilized vinyl chloride polymer compositions of the present invention can be formed into products in the customary ways, such as by injection molding, extrusion, sheeting, closed-mold molding, etc.

As can be seen from the description and examples, the present invention provides a means for more effectively stabilizing vinyl chloride polymers while at the same time realizing a cost savings by permitting smaller quantities of relatively expensive primary stabilizers to be used while maintaining a desired level of heat stabilization.

While the present invention has been described in terms of its specific embodiments, certain modifications and equivalents will be apparent to those skilled in the art.

0107063

-18-

## THE CLAIMS

1. A composition comprising a vinyl chloride polymer and a heat stabilization system comprised of an organotin or organoantimony primary stabilizer for said vinyl chloride polymer with sodium citrate or potassium citrate, said sodium citrate or potassium citrate component of said heat stabilization system having a particle size less than 30 µm.

2. The composition of claim 1 wherein said primary stabilizer is present within the range of from about 0.5 to 5.0 parts by weight of primary stabilizer per 100 parts by weight of said vinyl chloride polymer and said sodium citrate or potassium citrate component of said heat stabilization system is present within the range from about 0.01 to 5.0 parts by weight of said sodium citrate or potassium citrate component per 100 parts by weight of said vinyl chloride polymer.

3. The composition of claims 1 or 2 wherein said vinyl chloride polymer is a post-chlorinated vinyl chloride polymer having a density in the range of from about 1.46 to about 1.65 grams/cc at 25°C. and a chlorine content in the range of from about 60% to about 72% by weight.

4. The composition of claims 1 or 2 wherein said vinyl chloride polymer is a post-chlorinated polyvinyl chloride homopolymer.

5. The composition of claim 1 wherein said primary stabilizer is an organotin stabilizer for said vinyl chloride polymer.

6. The composition of claim 1 wherein said primary stabilizer is an organoantimony stabilizer for said vinyl chloride polymer.

7. The composition of claims 1 or 2 wherein said sodium citrate or potassium citrate component of said heat stabilization system has a particle size of less than 10 µm.

## European Patent Office

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | CHEMICAL ABSTRACTS, vol. 81, no. 18, 4th November 1974, page 52, no. 106703u, Columbus, Ohio, USA & JP - A - 74 37943 (SANKYO ORGANIC CHEMICAL CO., LTD.) 09-04-1974 * Abstract * | 1 | C 08 K    5/09<br>C 08 L   27/06<br>C 08 L   27/24  //<br>(C 08 K    5/09<br>C 08 K    5/57<br>C 08 K    5/59  ) |
| A | US-A-3 362 923   (C. KNUTH) * Claim 1 * | 1 | |

TECHNICAL FIELDS
SEARCHED (Int. Cl. ³)

C 08 K
C 08 L

The present search report has been drawn up for all claims

| Place of search | Date of completion of the search | Examiner |
|---|---|---|
| THE HAGUE | 06-01-1984 | HOFFMANN K.W. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO Form 1503 03 82